# EUROPÄISCHE PATENTANMELDUNG

(11) **EP 2 093 559 A2**
(43) Veröffentlichungstag der Anmeldung: **26.08.2009**
(21) Anmeldenummer: 09001474.7
(22) Anmeldetag: 04.02.2009
(51) Int. Cl.: G01N 21/59, G01N 21/64, G01N 21/76

(54) **Vorrichtung und Verfahren zur Messung von Lumineszenz und Fluoreszenz von transfizierten Zellen oder Organteilen**

(30) Priorität: 21.02.2008 DE 102008010436
(71) Anmelder: Berthold Technologies GmbH & Co. KG, 75323 Bad Wildbad (DE)
(72) Erfinder: Hennecke, Manfred, Dr., 73630 Remshalden (DE)
(74) Vertreter: Schön, Thilo

(57) **Zusammenfassung**

Es wird eine Vorrichtung zur Messung von Photonenemissionen, beispielsweise Biolumineszenz oder Biofluoreszenz, aus markierten Zellen beschrieben. Die Vorrichtung weist folgenden Komponenten auf: Eine rostierbare, zumindest teilweise transparente Wachstumskammer/Bioreaktor (10) zur Aufnahme von Zellkulturen, Wachstumsmedien und Wirkstoffen, einen Lichtdetektor (12) zum Nachweis der von den markierten Zellen aus der Wachstumskammer (10) austretenden Photonen und eine Iichtdichte Umhüllung (18) zumindest des Emissionsweges der Photonen von der Wachstumskammer (10) zum Lichtdetektor. Die Vorrichtung kann zur Durchführung von Verfahren dienen, bei denen der Einfluss von Wirkstoffen auf transfizierte Zellen gemessen wird.

## Beschreibung

Zum Auffinden und zur Erprobung neuer Medikamente, beispielsweise gegen Krebs, muss deren Wirkung an lebenden Zellen erprobt werden. Insbesondere bei Krabs-Medikamenten ist das Ziel häufig, Substanzen zu finden, welche das Wachstum von Krebszellen bremst oder - im Idealfall - die Krebszellen abtötet. Hierzu werden Tumorzellen gezielt gezüchtet, zur Vermehrung gebracht und zu einem späteren Zeitpunkt mit der zu testenden Substanz in Kontakt gebracht. Es wird dann beobachtet, wie sich die zu testende Substanz auf das Wachstum der Tumorzellen auswirkt.

Es sind zwei grundlegende Verfahren zum Überprüfen der Wirksamkeit von entsprechenden Substanzen bekannt. Beim ersten Verfahren werden die transfizierten Tumorzellen lebenden Tieren, meist Mäusen, gespritzt, wo sie bei Überwindung der Immun-Unterdrückung Tumore ausbilden. Beim zweiten Verfahren lässt man die transfizierten Tumorzellen in einer Nährlösung durch Zellteilung wachsen. Diese zwei Verfahren sollen zunächst beleuchtet werden:

### a) Verfahren mit lebenden Tieren

Es ist hier zwischen zwei Unterverfahren zu unterscheiden:

Beim ersten Verfahren wird das Tier nach Ablauf einer bestimmten Zeitspanne getötet und eine Gewebe-Histologie durchgeführt. Dieses Verfahren hat zahlreiche Nachteile: Zum einen bedarf es für eine relevante Aussage einer Vielzahl von Tieren in den verschiedenen Krebs-Stadien. Dies ist schon allein aus ethischen Gründen unerwünscht. Weiterhin ist Gewebe-Histologie sehr zeitaufwendig und personalintensiv. Durch die Schnitte und Anfärbungen ist die Vergleichbarkeit nicht immer gegeben.

Beim zweiten Verfahren werden transfizierte Zellen eingesetzt. Dazu werden Bakterien-DNA-Plasmide mit Luziferase-Gen oder Green-Fluorescence-Protein (GFP)-Gen modifiziert und in Tumorzellen eingebracht, bevor diese Tumorzellen injiziert werden. Nach Transkription und Translation bei der Vermehrung der Tumorzellen werden die Gen-Abschnitte in Proteine codiert, die dann in der Zelle vorliegen.

Im Falle von Luziferase werden unter Zugabe von Luziferin, Adenosintriphosphat (ATP), Sauerstoff und Calcium-lonen Photonen erzeugt (Biolumineszenz). Die Intensität der Biolumineszenz ist ein Maß für die Anzahl der Tumor-Zellen. Im Falle von GFP wird das Protein mit einer bestimmten Wellenlänge (480 nm) angeregt. Das emittierte Licht (520 nm) wird gemessen (Biofluoreszenz) und ist ebenfalls ein Maß für die Anzahl der Tumor-Zellen. Über Photonen-Detektion der Biolumineszenz oder -fluoreszenz mit Photomultiplieren oder höchst-empfindlichen Kameras können die emittierten Photonen nachgewiesen werden. Das Prinzip des Wirksamkeit-Nachweises einer Substanz besteht darin, dass entsprechende Substanzen (z. B. Zytostatika) die Krebs-Zellen abtöten. Mit diesem Zelltod wird auch die Biolumineszenz oder -fluoreszenz ausgelöscht, weil diese Proteine nicht mehr vervielfältigt werden. Typische Intensität/Zeit-Korrelationskurven sehen so aus, dass bei der Kontrollgruppe die Intensität laufend zunimmt, bei der Probantengruppe dagegen mehr oder weniger konstant bleibt, im besten Falle abnimmt.

Durch dieses zweite Verfahren minimiert man deutlich die Anzahl der benötigten Tiere. Aber Organe im Körperinnern sind schlecht detektierbar, da die Photonen beispielsweise durch Hämoglobin oder Melamin absorbiert werden. Besonders Leberschädigungen sind durch in-vivo Imaging sehr schwierig nachzuweisen, da dieses Organ besonders gut mit Blut versorgt wird. Zudem ist in-vivo Imaging nicht automatisierbar.

Diese Biolumineszenz oder Biofluoreszenz kann mit geeigneten Geräten nachgewiesen werden, z. B. LB 940, LB 941, LB 960 oder LB 983 der Firma Berthold.

### b) Verfahren ohne lebende Tiere

Auch hier sind zwei Unterverfahren zu unterscheiden, nämlich 2D-Verfahren und 3D-Verfahren. Diese Verfahren werden in der Regel mit transfizierten Zellen durchgeführt, welche Biolumineszenz oder Biofluoreszenz zeigen (s. oben).

Bei 2D-Verfahren lässt man die Tumorzellen entweder in Mikrotiterplatten oder sonstigen Kulturschalen wachsen. Hier gibt es keine Störung durch Hämoglobin, weil die Zellen ohne Blut gezüchtet werden. Allerdings haben die Zellen die Eigenschaft, sich primär am Boden abzulagern, wo sie eine Monolayer-Zellschicht bilden. Die Zellen bilden keine gewebeartige dreidimensionale Vernetzung mit benachbarten Zellen, was eine Voraussetzung für eine physiologisch relevante Aussage wäre. Vorteilhaft hingegen ist, dass das Verfahren zu einem hohen Grad automatisierbar ist.

Bei 3D-Verfahren werden sogenannte 3D-Wachstumskammern eingesetzt. In derartigen Instrumenten dreht sich ein Glaszylinder um eine horizontale Achse. Diese Drehung bewirkt Mikro-Gravitationskräfte, wodurch die Zellen beginnen, organartig zu wachsen und dreidimensionale Zellhaufen oder Organe ausbilden. Wird dieses Verfahren angewandt, werden folgende Arbeitsschritte ausgeführt: 1. Einbringung transfizierter Zellen und einer Nährflüssigkeit 2. zur Überprüfung des Zell-Wachstums werden manuell Aliquote entnommen und die Zellmasse bestimmt. 3. Einbringung eines zu testenden Wirkstoffes. 4. wiederholte zeitabhängige manuelle Entnahme von Aliquoten zur Messung der Biolumineszenz oder - fluoreszenz 5. Erstellung einer Intensität/Zeit-Korrelation aus den vorhergehenden Schritten.

Nachteile dieser Methode sind die Schritte 2 und 4, da diese umständlich, zeitaufwendig, nicht automatisierbar, daher personalintensiv und kostenaufwendig sind.

### Darstellung der Erfindung

Es ist Aufgabe der Erfindung, die bekannten Vorrichtungen und Verfahren zur Messung von Lumineszenz oder Fluoreszenz an Zellen derart weiterzubilden, dass eine schnellere und recourcenschonende Messung erreicht wird.

Diese Aufgabe löst die Erfindung mit den Merkmalen der Patentansprüche 1 und 14.

Basierend auf der bekannten Technologie der 3D-Wachstumskammern (z.B. der Firma Synthecon, Texas, USA) wird ein Gerät zur Licht-Messung von transfizierten Zellen (reporter-gene-assay) weiterentwickelt, wobei der Grundgedanke in der Integration der 3D-Wachstumskammer in die Messeinrichtung zu sehen ist.

Mit der erfindungsgemäßen Vorrichtung ist es somit möglich, humane Zellen oder Organteile mit z.B. Promotor-abhängiger DNA auf ihre Reaktion auf neue pharmakologische Wirkstoffe automatisch und reproduzierbar zu testen. Des Weiteren kann ein Dosis-Reaktions-Zusammenhang leicht festgestellt werden. Nebenwirkungen, besonders auf Leberzellen, lassen sich ebenfalls leicht feststellen.

Da mit den 3D-Wachstumskammern das natürliche Wachstum der Zellen oder Organteile bereits manifestiert wurde, braucht man Tiere nur noch zur Manifestierung eines mit dem erfindungsgemässen Verfahren festgestellten Effekts der Wirksamkeit des zu testenden Wirkstoffs. Eventuell kann sogar auf eine Kontrollgruppe von Tieren verzichtet werden, so dass in Zukunft weit weniger Tiere für pharmakologische Wirksamkeitsstudien benötigt werden.

Weiterhin muss man die Korrelation zwischen Tieren (Mäusen, Ratten) und Humanzellen nur einmal machen, um Rückschlüsse auf die Wirksamkeit bzw. Nebenwirkungen eines Präparates für den Menschen zu dokumentieren. Dies ist zur Zeit nicht möglich.

Mit dem Einsatz von CCD-Kameras in der erfindugsgemässen Vorrichtung kann sogar die Ort der Promotor-abhängigen Reaktion festgestellt werden, d.h. wird bspw. zu einem Prostata-Karzinom zu einer bestimmten Zeit ein Knochen-Querschnitt dazugegeben, kann die Zeit bestimmt werden, wann der ProstataKrebs das Knochenmark befällt, bzw. welche Wirkstoffe das verhindern. Dies ist mit humanen Zellen zur Zeit nicht möglich.

Zwei Ausführungsbeispiele der erfindungsgemässen Vorrichtung werden nun anhand von Figuren näher erläutert. Es zeigen:
- Fig. 1:: einen schematischen Längsschnitt eines ersten Ausführungsbeispiels,
- Fig. 2:: einen schematischen Längsschnitt eines zweiten Ausführungsbeispiels,

### Beschreibung bevorzugter Ausführungsformen

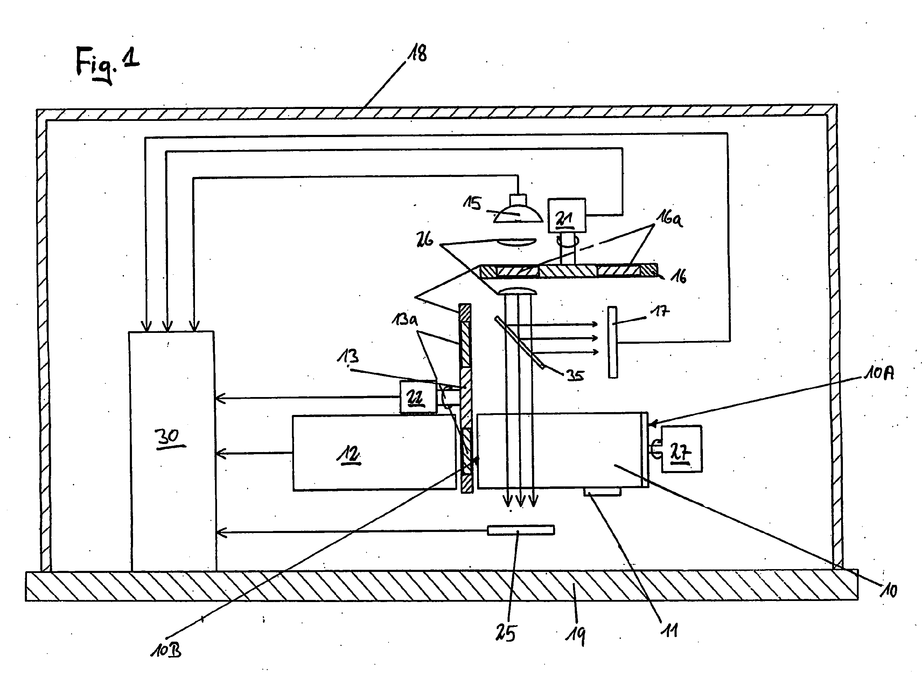

Die Figur 1 zeigt schematisch ein erstes Ausführungsbeispiel der Erfindung.

Die gezeigte Vorrichtung weist eine 3D-Wachstumskammer 10, einen Photomultiplier 12, eine Lichtquelle in Form einer Halogenlampe 15, zwei Photodioden 17,25, einen halbdurchlässigen Spiegel 35 und Kollimatorlinsen 26 auf. Die 3D-Wachstumskammer ist ein Hohlzylinder aus einem durchsichtigen Material, wie beispielsweise aus Glas. An die erste Stirnseite 10A der 3D-Wachstumskammer ist ein Elektromotor 27 gekoppelt, welcher die 3D-Wachstumskammer in eine Rotation um ihre Längsachse versetzen kann. Auf die zweite Stirnseite 10B der 3D-Wachstumskammer ist das Eintrittsfenster des Photomulipliers gerichtet. Die 3D-Wachstumskammer weist, beispielsweise an ihrer Mantelfläche, eine als Zugabeeinrichtung dienende verschließbare Zuführöffnung 11 zur Zugabe von Zellkulturen, Wachstumsmedien und Wirkstoffen auf. Die eben genannten Vorrichtungen sind vollständig umschlossen, nämlich auf der Unterseite von einer Grundplatte 19 und von einer lichtdicht auf die Grundplatte 19 aufgesetzten Haube 18.

Die beschriebene Vorrichtung ist dazu geeignet, an Zellen oder Organteilen (auch human), welche in der 3D-Wachstumskammer wachsen, Biolumineszenz oder Biofluoreszenzmessunegn durchzuführen. Hierzu werden durch die verschließbare Zuführöffnung 11 zunächst Zellen/Organteile, ein flüssiges Wachstumsmedium und der zu untersuchende Wirkstoff zugegeben. Die Zellen/Organteile, welche in der 3D-Wachstumskammer wachsen, beinhalten transfizierte Zellen, welche Biolumineszenz oder Biofluorezenz zeigen. Anschließend wird die Haube auf die Grundplatte aufgesetzt.

Bei einer Biolumineszenzmessung muss die Halogenlampe 15 ausgeschaltet sein. Die aus der zweiten Stirnseite 10B der 3D-Wachstumskammer 10 austretenden Biolumineszenz-Photonen gelangen in den Photomultiplier und werden dort in bekannter Art und Weise in elektrische Signale umgewandelt, welche mittels der Auswerteelektronik 30 gezählt werden.

Bei BRET-Messungen (Bioluminescence Resonance Energy Transfer) wird durch den Emissionsfiltermotor 22 das Emissionsfilterrad 13 angetrieben und ein geeignetes Emissionsfilter 13a wird zwischen die zweite Stirnseite 10B der 3D-Wachstumskammer 10 und das Eintrittsfenster des Photomultipliers 12 gebracht. Eine erste Messung erfolgt wie oben beschrieben durch den Photomultiplier. Anschließend erfolgt nach Drehen des Emissionsfilterrades 13 eine zweite Messung mit einem Filter 13a anderer Transmissionswellenlänge. Daraufhin wird das Signalverhältnis aus den beiden Messungen bestimmt.

Soll eine Biofluoreszenzmessung durchgeführt werden, so wird die Halogenlampe 15 eingeschaltet, so dass Licht durch ein Excitations-Filter 16a in die 3D-Wachstumskammer 10 eingestrahlt wird. Es sind in der Regel mehrere Excitationsfilter 13a vorhanden, welche in einem Excidationsfilterrad 16 angeordnet sind, welches mittels eines Excidationsfilter-Motors 21 rotiert werden kann. Das Anregungslicht gelangt durch den beschriebenen Lichtweg in die 3D-Wachstumskammer 10, wo es Biofluoreszenz anregt. Da die Stärke der Biofluoreszenz nicht nur von den Eigenschaften der zur Biofluoreszenz angeregten Materie, sondern auch von der Stärke des Anregungslichtes abhängt, ist im Lichtweg des Anregungslichtes ein halbdurchlässiger Spiegel 35 vorgesehen, welcher die Hälfte (oder ein anderen bekannten Prozentsatz) des Emissionslichtes auf eine erste Photodiode 17 reflektiert, so dass ein entsprechendes Referenzsignal erzeugt wird, um eine konstante Excitation zu gewährleisten.

Das Anregungslicht kann weiterhin dazu genutzt werden, die Zell- oder Organdichte tubidimetrisch zu messen. Hierfür dient eine zweite Photodiode 25, welche auf der optischen Achse des Anregungslichtes liegt. Das Anregungslicht durchstrahlt die 3D-Wachstumskammer senkrecht zu deren Längsachse. Zur Parallelisierung des Anregungslichtes dienen zwei Kollimatorlinsen 26.

Die zweite Stirnseite 10B der Wachstumskammer 10 kann linsenförmig gestaltet sein, um Photonen optimal zum Detektor zu lenken. Wird als Lichtdetektor ein Photomultipilier eingesetzt, ist die Mantelfläche der 3D-Wachstumskammer vorzugsweise zumindest abschnittsweise verspiegelt, um die Photonenausbeute zu eröhen. Da sich mit einem einzelnen Photomuliplier ohnehin keine örtliche Auflösung erzielen lässt, ergeben sich durch die Verspiegelung keine Nachteile. In Fällen, in denen eine Biofluoreszenz-Messung durchgeführt werden soll, darf in dem Bereich, in dem Licht in die 3D-Wachstumskammer eingestrahlt wird, natürlich keine Verspiegelung vorgesehen sein, da sonst das Anregungslicht nicht angekoppelt werden kann. Im Falle, dass eine örtliche Auflösung erzielt werden soll kann anstatt eines Photomultipliers eine CCD-Kamera eingesetzt werden, welche in der Regel ebenso wie ein Photomultiplier gekühlt wird. In diesem Fall sollte auf eine Verspiegelung der3D-Wachstumskammer verzichtet werde, da diese einer Ortsauflösung entgegensteht.

Die gesamte Licht-Messeinheit ist nach hinten klappbar ausgeführt, so dass die Wachstumskammer 10 leicht zugänglich ist, z.B. für Anflanschen, Entnahme, Komponenten-Zugabe. Da die PMT-Detektor-Einheit immer an derselben Stelle ist, muss die Wachstumskammer immer dieselbe Länge für verschiedene Volumina haben.

Der von Gehäuse 18 und Grundplatte 19 umschlossene Raum wird mittels einer regelbaren Heizung geheizt, das im Inneren der 3D-Wachstumskammer eine konstante Temperatur von 37°C ±0,5°C herrschen soll, eine direkte Beheizung der 3D-Wachstumskammer in der Regel jedoch nicht erwünscht ist. Der Photomultiplier oder eine anstelle des Photomultipliers 12 vorhandene CCD-Kamera werden hingegen gekühlt, um das Rauschen zu minimieren.

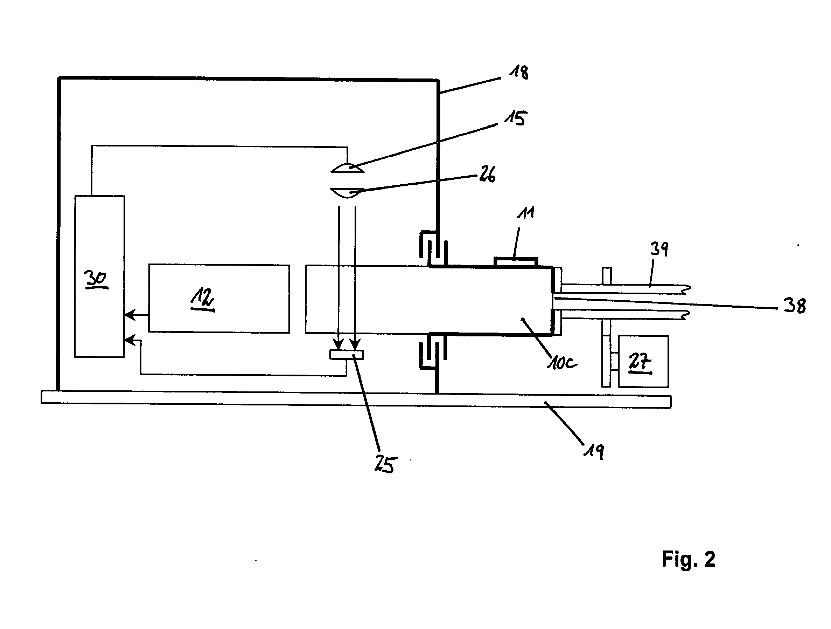

Die Figur 2 zeigt ein zweites Ausführungsbeispiel. Im Gegensatz zum ersten Ausführungsbeispiel befindet sich hier die 3D-Wachstumskammer 10 nicht vollständig innerhalb der lichtdichten Haube 18, sondern ragt über eine Lichtdichtung 32 aus dieser heraus. Dies hat den Vorteil, dass die verschließbare Öffnung 11 der 3D-Wachstumskammer auch unmittelbar vor oder während des Messprozesses, bei welchem Dunkelheit herrschen muss, zugänglich ist. Wenn während des Messprozesses eine Substanz ins Innere der 3D-Wachstumskammer zugegeben werden soll, ist an der verschließbaren Öffnung 11 gegebenenfalls eine lichtdichte Schleuse vorzusehen, um Lichteinfall zu verhindern.

Eine solche Anordnung macht es weiterhin notwendig, dass das hintere, aus dem Gehäuse ragende Ende 10C der 3D-Wachstumskammer 10 lichtdicht beschichtet ist. Hier ist es sinnvoll, auf den Glaszylinder, welcher in der Regel die Wandung der 3D-Wachstumskammer bildet, zunächst eine spiegelnde Schicht (falls gewünscht) und dann eine lichtdichte Schicht, beispielsweise in Form von schwarzer Farbe aufzutragen. Es ist weiterhin sinnvoll, das aus dem Gehäuse ragende Ende 10C thermisch zu isolieren, um eine gleichmäßige Temperatur im Inneren der 3d-Wachstumskammer sicherzustellen. Die Funktionsweise ist wie oben beschrieben, insbesondere können dieselben optischen Instrumente, Lichtquellen und Sensoren vorhanden sein, wenn hier auch nicht sämtliche dargestellt sind.

Es ist weiterhin möglich, alternativ oder zusätzlich zur verschließbaren Öffnung 11 eine Zuführeinrichtung in Form einer mit einem Diaphragma 38 verschlossenen Öffnung in der ersten Stirnseite 10A der 3D-Wachstumskammer vorzusehen, vorzugsweise konzentrisch zur Längsachse der zylindrischen 3D-Wachstumskammer. Hierzu ist die Antriebswelle 39, welche die 3D-Wachstumskammer mit dem Elektromotor 27 verbindet, hohl ausgebildet, so dass dieses Diaphragma von außen zugänglich ist. Somit können beispielsweise Wirkstoffe durch dieses Diaphragma ins Innere der 3D-Wachstumskammer zugegeben werden, ohne dass die Drehung der 3D-Wachstumskammer unterbrochen werden muss. Hierzu kann innerhalb der hohlen Antriebswelle eine Zuführleitung angeordnet sein (nicht dargestellt).

### Bezugszeichenliste

- 10: 3D-Wachstumskammer
- 10A: erste Stirnseite
- 10B: zweite Stirnseite
- 10C: aus dem Gehäuse ragendes Ende
- 11: Zugabeöffnung
- 12: Photomultiplier
- 13: Emissionsfilterrad
- 13a: Emissionsfilter
- 15: Lichtquelle
- 16: Excitationsfilterrad
- 16a: Excitationsfilter
- 17: erste Photodiode
- 18: Gehäuse
- 19: Grundplatte
- 20: Wachstumskammer-Motor
- 21: Ecitationsfilter-Motor
- 22: Emissionsfilter-Motor
- 25: zweite Photodiode
- 26: Koolimatorlinsen
- 27: Elektromotor
- 30: Auswerteelektronik
- 32: Lichtdichtung
- 35: halbdurchlässiger Spiegel
- 38: Diaphragma
- 39: Antriebswelle

## Patentansprüche

1. Vorrichtung zur Messung von Photonenemissionen aus markierten Zellen, mit folgenden Komponenten:
- Eine rotierbare, zumindest teilweise transparente Wachstumskammer/Bioreaktor (10) zur Aufnahme von Zellkulturen, Wachstumsmedien und Wirkstoffen mit mindestens einer Zugabeeinrichtung für die markierten Zellen und für einen Wirkstoff.
- Ein Lichtdetektor zum Nachweis der von den markierten Zellen aus der Wachstumskammer (10) austretenden Photonen, und
- eine lichtdichte Umhüllung zumindest des Emissionsweges der Photonen von der Wachstumskammer (10) zum Lichtdetektor.

2. Vorrichtung nach Anspruch 1, **gekennzeichnet durch** Einrichtungen zur Anregung von Fluoreszenz in den markierten Zellen.

3. Vorrichtung nach Anspruch 1 oder 2, **gekennzeichnet durch** Einrichtungen für Absorptionsmessungen.

4. Vorrichtung nach einem der Ansprüche 1 bis 3, **dadurch gekennzeichnet, dass** als Lichtdetektor ein Photomultiplier (12) vorgesehen ist.

5. Vorrichtung nach einem der Ansprüche 1 bis 3, **dadurch gekennzeichnet, dass** als Lichtdetektor eine CCD-Kamera vorgesehen ist.

6. Vorrichtung nach Anspruch 4, **dadurch gekennzeichnet, dass** zwischen Photomultiplier (12) und der transparenten Stirnseite (10B) der Wachstumskammer (10) ein Emissionsfilter (13a) anordenbar ist.

7. Vorrichtung nach Anspruch 2, **dadurch gekennzeichnet, dass** eine Lichtquelle (15) über ein Excitationsfilter (16a) und eine Photodiode (25) optisch an die Wachstumskammer (10) angekoppelt sind.

8. Vorrichtung nach einem der Ansprüche 1 bis 7, **dadurch gekennzeichnet, dass** alle Komponenten unter einer lichtdichten Haube (18) untergebracht sind.

9. Vorrichtung nach einem der Ansprüche 1 bis 7, **dadurch gekennzeichnet, dass** eine lichtdichte Haube (18) vorgesehen ist, unter welcher sämtliche optischen Bauteile untergebracht sind und dass ein Ende (10C) der 3D-Wachstumskammer über eine Lichtdichtung (32) durch die Haube durchtritt, wobei dieses Ende (10C) lichtdicht ausgestaltet ist.

10. Vorrichtung nach Anspruch 9, **dadurch gekennzeichnet, dass** wenigstens eine Zugabeeinrichtung am aus dem Gehäuse ragenden Ende (10C) der 3D-Wachstumskammer angeordnet ist.

11. Vorrichtung nach einem der vorangehenden Ansprüche, **dadurch gekennzeichnet, dass** zumindest ein Teil der Außenwandung der Wachstumskammer (10) reflektierend ausgestaltet ist.

12. Vorrichtung nach einem der vorangehenden Ansprüche, **dadurch gekennzeichnet, dass** wenigstens eine Zugabeeinrichtung eine von einem Diaphragma (38) abgedeckte Öffnung ist.

13. Vorrichtung nach Anspruch 12, **dadurch gekennzeichnet, dass** die 3D-Wachstumskammer ein Hohlzylinder ist und dass die vom Diaphragma abgedeckte Öffnung an einer Stirnseite (10A) dieses Hohlzylinders angeordnet ist.

14. Verfahren zur Emissionsmessung von transfizierten Zellen unter Verwendung der Vorrichtung nach Anspruch 1, **gekennzeichnet durch** folgende Verfahrensschritte:
- Einbringung der transfizierten Zellen in die Wachstumskammer
- Überprüfung des Wachstums der Zellen
- Einbringung eines zu testenden Wirkstoffs in die Wachstumskammer,
- Messung der aus der Wachstumskammer austretenden Photonen kontinuierlich oder in vorgebbaren Zeitabständen,
- Anzeige und/oder Speicherung des zeitlichen Verlaufs der Emissionsintensität.

15. Verfahren nach Anspruch 14, **dadurch gekennzeichnet, dass** eine Absorptionsmessung zur Berücksichtigung der Zelldichte durchgeführt wird.

16. Verfahren nach Anspruch 14, **gekennzeichnet durch** seine Verwendung zur Verfolgung der Pharmacokinetik.

17. Verfahren nach Anspruch 14, **gekennzeichnet durch** seine Verwendung zur Bestimmung der Wirkung des gleichen Wirkstoffs auf andere Zellen zur Erfassung von Nebenwirkungen.
